# FASCICULE DE BREVET EUROPEEN

(11) **EP 1 943 455 B1**
(45) Date de publication et mention de la délivrance du brevet: **28.09.2011**
(21) Numéro de dépôt: 06820308.2
(22) Date de dépôt: 18.10.2006
(51) Int. Cl.: F17C 13/04, F16K 1/30

(54) **ENSEMBLE COMPRENANT UN RESERVOIR DE STOCKAGE DE GAZ SOUS PRESSION ET UN DISPOSITIF DE COMMANDE DU REMPLISSAGE ET/OU DU SOUTIRAGE DUDIT RESERVOIR**
ANORDNUNG MIT EINEM TANK ZUR LAGERUNG EINES DRUCKGASES UND STEUERUNGSVORRICHTUNG ZUR FÜLLUNG DES TANKS MIT GAS ODER ZUR EXTRAKTION VON GAS AUS DIESEM
ASSEMBLY INCLUDING A PRESSURISED GAS STORAGE TANK AND A CONTROL DEVICE FOR FILLING THE TANK WITH GAS AND/OR EXTRACTING GAS THEREFROM

(30) Priorité: 27.10.2005 FR 0553261
(43) Date de publication de la demande: 16.07.2008
(73) Titulaire: L'AIR LIQUIDE, Société Anonyme pour l'Etude et l'Exploitation des Procédés Georges Claude, 75007 Paris (FR)
(72) Inventeur: DENIS, Arnaud, F-78440 Lainville En Vexin (FR); LIGONESCHE, Renaud, F-95220 Herblay (FR); PISOT, Philippe, F-95290 L'isle Adam (FR)
(74) Mandataire: De Cuenca, Emmanuel Jaime
(86) Numéro de dépôt international: PCT/FR2006/051051
(87) Numéro de publication internationale: WO 2007/048956

(56) Documents cités:
- EP-A- 1 316 755
- US-A- 5 018 552
- US-B1- 6 620 256

## Description

La présente invention concerne un ensemble comprenant un réservoir de stockage de gaz sous pression et un dispositif de commande du remplissage et/ou du soutirage dudit réservoir.

L'alimentation de dispositifs consommant du gaz, par exemple une pile à combustible, pose de nombreux problèmes. Il est notamment important d'assurer une simplification et la sécurisation de l'alimentation en se plaçant notamment dans le cadre du principe d'échange d'un réservoir vide par un réservoir plein.

Ce problème est d'autant plus sensible que la tendance est à l'augmentation des pressions de service, ceci afin d'offrir un meilleur rapport entre la masse de gaz stockée et la masse totale du réservoir, conjointement à un faible encombrement.

De plus, il y a augmentation de la diffusion de systèmes nécessitant l'utilisation de gaz à un public de non spécialistes (professionnel tel que infirmières, laborantins par exemple ou grand public tel que les bricoleurs, les automobilistes,...).

Un objectif des systèmes de stockage de fluide et de leurs dispositifs de remplissage et/ou de soutirage est de rendre faciles les manipulations nécessitées par l'action d'échanger un réservoir plein contre un réservoir vide. Les systèmes de stockage doivent de plus assurer implicitement un niveau de sécurité rendant possible ces manipulations par des non-spécialistes, tout en permettant d'améliorer la sécurité et la productivité dans des centres de conditionnement.

Il est connu de stocker du gaz sous forme liquide. Dans des solutions connues (CO2 par exemple), cela est réalisé assez naturellement et ne nécessite pas la mise en oeuvre de moyens particuliers. Dans la majeure partie des cas, (hydrogène par exemple), il est cependant nécessaire de maintenir des conditions de température telles que la mise en oeuvre de moyens particuliers est obligatoire (isolation thermique, gestion de l'ébullition ou « boil-off »). Cette mise en oeuvre rend la solution de stockage liquide peu pertinente car beaucoup trop complexe et inadaptée au concept d'échange vide contre plein.

Parmi les solutions de stockage sous forme gazeuse, on trouve classiquement des bouteilles équipées d'un robinet simple, qui, s'il est ouvert, met l'utilisateur directement en contact avec la pression de stockage. Il est donc nécessaire, pour utiliser le gaz, de connecter du matériel (détendeurs, débitmètre,...) nécessitant des outils et opérations fastidieuses. Ces opérations sont d'autant plus risquées lorsque l'utilisateur n'est pas professionnel (fuites, projection de pièces...).

On connaît des recharges de gaz légères et d'encombrement réduit proposant une solution consistant à doter une cartouche d'une valve sans organe d'actionnement mais dont l'inconvénient est de délivrer du gaz à la pression de stockage.

Pour prévenir les risques liés à la haute pression, des cartouches ou bouteilles peuvent être équipées d'un robinet détendeur permettant, pour l'utilisateur, de n'accéder qu'à une pression réduite. Cette solution présente l'inconvénient de créer une partie saillante sur la bouteille. Cette partie saillante nécessite alors une protection. Cette protection est généralement constituée d'un chapeau. Globalement, le poids et l'encombrement sont augmentés et, le cas échéant, l'intégration de la bouteille dans l'application nécessitant du gaz manque de simplicité.

Par ailleurs, la plupart des réserves de gaz livrées chez des clients sont amenées à être mobiles. Dans un cas extrême, la source de gaz autonome pourrait être amenée à être déployée et suivre l'application consommatrice de gaz, par exemple pour alimenter une pile à combustible sur un site isolé ou pour suivre des pompiers en intervention d'urgence.

Chaque client ou famille de clients a ses besoins spécifiques auxquels il convient de répondre le mieux possible. Ceci a pour conséquence une complexification de l'organisation industrielle car il est nécessaire de gérer une grande diversité de produits (couple fluide/réservoir et conditions de délivrance du fluide).

Un problème à résoudre est d'une part d'offrir à l'utilisateur et/ou à l'exploitant des moyens lui facilitant le transport et la manutention d'une réserve de gaz et, d'autre part, d'offrir à l'utilisateur des moyens permettant de personnaliser l'architecture d'une réserve de gaz pour satisfaire les besoins de son application, et à l'exploitant une flexibilité lui permettant de gérer la diversité des produits nécessaires à la satisfaction de ses clients.

Parmi les solutions de stockage sous forme gazeuse, les bouteilles équipées d'un robinet simple sont très favorables à l'exploitant et à l'industriel pour la gestion du parc. S'il est ouvert, le robinet simple met l'utilisateur directement en contact avec le fluide à sa pression de stockage. Il est donc nécessaire pour utiliser le gaz de connecter du matériel (détendeur, débitmètre, etc....) exigeant des outils et opérations fastidieuses, et ce avec les risques que comporte ce type d'opération quand l'utilisateur n'est pas professionnel. Cette solution n'est donc pas favorable à l'utilisateur final.

Plus favorable à l'utilisateur final est le robinet détendeur rapporté sur la bouteille délivrant le fluide à la pression nécessaire à l'application. Toutefois, l'exploitation de ce dernier implique à l'industriel d'importantes contraintes en terme notamment de gestion du parc, de maintenance, d'interface avec le matériel de remplissage.

Dans des architectures connues de stockage de gaz sous pression, le robinet intègre un dispositif de détente qui vient se placer à l'intérieur du volume de la bouteille (cf. par exemple US 6 620 256 B1 ou EP-A-1316755). Ces dispositifs connus permettent de limiter en partie le volume du robinet mais nécessitent des manipulations et raccordements multiples pour l'utilisateur en vue des remplissages et soutirages.

Le document US5018552 décrit une valve pour emballage de gaz non rechargeable. La valve comprend deux clapets disposés en série. Les deux clapets sont sollicités selon des directions opposées vers des postions de fermeture du passage de gaz. Le premier clapet (côté extérieur de récipient) fait saillie dans une cavité de façon à pouvoir être actionné vers sa position d'ouverture par la tige mobile d'un robinet. Lors de sa première ouverture le premier clapet débarrasse le second clapet d'un élément de verrouillage qui le bloquait en en position ouverte. Débarrassé de son élément de verrouillage ce second clapet peut alors se refermer lorsque la pression de gaz dans récipient est inférieure à un seuil ou lorsque qu'un utilisateur tente de le remplir à nouveau.

Ainsi, aucune des solutions existantes précitées ne prend en compte simultanément les besoins spécifiques de l'industriel et du client.

Un but de la présente invention est de pallier tout ou partie des inconvénients de l'art antérieur relevés ci-dessus.

A cette fin, l'invention concerne un ensemble comprenant un réservoir de stockage de gaz sous pression et un dispositif de commande du remplissage et/ou du soutirage dudit réservoir, le réservoir comprenant un orifice permettant la communication avec l'intérieur du réservoir, une tête de remplissage et de distribution disposée au niveau de l'orifice et comprenant un dispositif de pré-détente intégré au moins partiellement à l'intérieur du volume du réservoir, une interface de connexion destinée à coopérer en accrochage et de façon amovible avec le dispositif de commande de remplissage et/ou du soutirage de gaz.

Selon l'invention la tête comprend un organe d'isolement tel qu'une valve, logé au moins partiellement à l'intérieur du volume de la tête et accessible pour un organe d'ouverture extérieur à la tête via un orifice d'accès formé dans la tête, le dispositif de commande du remplissage et/ou du soutirage comportant un corps pourvu d'une extrémité de connexion destinée à coopérer en accrochage amovible avec l'interface de connexion, un organe d'ouverture mobile relativement au corps, un élément d'actionnement apte à déplacer sélectivement l'organe d'ouverture entre une position de repos escamotée et une position de travail dans laquelle une extrémité de l'organe d'ouverture fait saillie en dehors du corps, au-delà de l'extrémité de connexion, de façon à permettre la plongée de l'organe d'ouverture à l'intérieur de l'orifice d'accès de la tête pour actionner selectivement en ouverture l'organe d'isolement, le dispositif de commande du remplissage et/ou du soutirage comportent un orifice d'entrée pour le gaz soutiré du réservoir, une première soupape de sécurité et un organe de détente du fluide soutiré, la première soupape de sécurité et l'organe de détente étant reliés en parallèle à l'orifice d'entrée.

Par ailleurs, l'invention peut comporter l'une ou plusieurs des caractéristiques suivantes:
- l'organe d'isolement est intégré au moins partiellement à l'intérieur du volume du réservoir,
- le dispositif de commande comporte un orifice pour le transit de gaz depuis et/ou vers le réservoir et en ce que l'organe d'ouverture est mobile dans ledit orifice de façon que l'organe d'isolement et le gaz empruntent le même passage ou canal,
- la sortie aval de l'organe de détente est reliée à une deuxième soupape de sécurité et à un orifice de sortie de fluide vers l'extérieur du dispositif,
- la deuxième soupape de sécurité et l'orifice de sortie de fluide sont reliés en parallèles à la sortie de l'organe de détente via des conduits respectifs,
- l'interface de connexion comprend une zone de réception concave destinée à accueillir et guider l'extrémité en saillie de l'organe d'ouverture de vanne,
- l'extrémité de connexion du dispositif de commande possède une extrémité tubulaire dans laquelle l'organe d'ouverture est monté mobile et en ce que la zone de réception et l'extrémité tubulaires ont des formes et dimensions conjuguées pour permettre à l'extrémité tubulaire de venir se loger dans la zone de réception,
- la tête comprend un circuit de remplissage s'étendant entre une première extrémité pourvue d'un orifice de remplissage et une seconde extrémité destinée à communiquer avec l'intérieur du réservoir, un circuit de soutirage s'étendant entre une première extrémité destinée à communiquer avec l'intérieur du réservoir et une seconde extrémité pourvue d'un orifice de soutirage, et en ce que l'orifice de remplissage et/ou l'orifice de soutirage débouche dans la zone de réception concave de l'interface de connexion,
- l'orifice de remplissage et l'orifice de soutirage coïncident dans la zone de réception concave de l'interface de connexion,
- l'orifice d'accès comprend ou est constitué par la zone de réception concave,
- l'interface de connexion de la tête et l'extrémité de connexion du dispositif de commande comportent des éléments d'accrochage complémentaires tels que des ergots en saillie et/ou des logements conjugués de façon à constituer une fixation amovible de type « à baïonnette »,
- l'ensemble comporte des organes de verrouillage amovibles des éléments d'accrochage,
- les éléments d'accrochage comportent des logements sensiblement en forme de rainure coudée comprenant une première extrémité ouverte destinée à permettre l'entrée et la sortie d'un ergot relativement au logement et une seconde extrémité formant un fond destiné à accueillir l'ergot en position d'accrochage, les organes de verrouillage amovibles comportant au moins une extrémité formant butée dans au moins un logement, la butée étant mobile entre une première position de blocage entre les deux extrémités du logement, et une seconde position escamotée libérant le passage entre les deux extrémités du logement,
- l'ensemble comporte un ou des éléments de rappel sollicitant la butée vers sa position de blocage, la butée étant apte à être déplacée vers sa position escamotée soit sous la poussée d'un ergot introduit à partir de la premières extrémité du logement, soit par traction des organes de verrouillage à partir d'une zone de préhension ou déplaçable à distance.
- l'organe d'isolement est disposé en aval du dispositif de pré-détente selon un trajet depuis l'intérieur du réservoir vers l'extérieur du réservoir,
- l'organe d'isolement et le dispositif de pré-détente sont disposés dans un même canal de circulation de fluide entre l'intérieur et l'extérieur du réservoir de sorte que le remplissage et la vidange du réservoir sont réalisées sensiblement selon un même axe, selon un même orifice et selon ce même canal,
- l'interface de connexion comporte une portion interne logée à l'intérieur du corps de la tête de remplissage et en ce que l'organe d'isolement est disposé au moins partiellement au sein de portion logée à l'intérieur de la portion interne de l'interface,
- l'organe d'isolement comprend un corps mobile relativement à la tête apte à coopérer en ouverture ou en fermeture avec un siège, l'organe d'isolement comprenant une extrémité aval libre apte à être poussée pour commander son ouverture ou sa fermeture,
- l'organe d'isolement est mobile en translation,
- le dispositif de pré-détente comprend un clapet mobile apte à coopérer en ouverture ou en fermeture avec un siège, un premier moyen de rappel sollicitant le clapet vers sa position de fermeture contre le siège, le clapet étant sollicité vers sa position d'ouverture par un piston de pré-détente sollicité par un second moyen de rappel,
- les éléments d'accrochage de la tête sont disposés sensiblement concentriquement autour de la zone de réception concave de l'interface de connexion,
- l'interface de connexion est monobloc avec la tête ou rapportée dans ou sur cette dernière,
- l'interface de connexion comporte une paroi périphérique extérieure sensiblement parallèle à l'axe vertical du réservoir, des éléments d'accrochages étant formés sur cette paroi périphérique extérieure,
- les éléments d'accrochage de l'interface sont orientés ou disposés pour coopérer en accrochage avec des éléments complémentaires selon une direction d'accrochage parallèle et de préférence confondue avec l'axe vertical du réservoir passant par l'orifice et le fond du réservoir,
- la tête de remplissage comprend un dispositif de décharge de sécurité comprenant un port, le port comprenant une première extrémité reliée à l'extérieure du réservoir et obturée par un moyen de fermeture fusible thermiquement et/ou au-delà d'une pression déterminée et une seconde extrémité reliée à l'intérieur du réservoir.

D'autres particularités et avantages apparaîtront à la lecture de la description ci-après, faite en référence aux figures dans lesquelles:
- les figure 1 et 2 représentent des vues extérieures en perspective isométrique d'un exemple de réalisation d'un réservoir selon l'invention, respectivement sans et avec une enveloppe couvrant la surface extérieure du réservoir 1,
- la figure 3 est une vue en coupe longitudinale à plus grande échelle de la partie supérieure du réservoir de la figure 2,
- la figure 4 est une vue extérieure en perspective isométrique d'un exemple de réalisation d'une prise de remplissage, notamment pour un réservoir conforme aux figures 1 et 2,
- la figure 5 est une vue en coupe longitudinale de la prise de remplissage de la figure 4
- la figure 6 est une vue en coupe longitudinale de la prise de remplissage de la figure 4 en raccordement avec le réservoir de la figure 2,
- les figures 7 et 8 sont des vues extérieures en perspective isométrique d'un exemple de réalisation d'une tête de délivrance de fluide selon l'invention,
- la figure 9 est une vue extérieure en perspective isométrique de la tête de délivrance de fluide des figures 7 et 8 équipée d'un raccord de sortie,
- la figure 10 est une vue en coupe longitudinale de la tête de délivrance des figures 7 et 8 équipée de son raccord de sortie;
- la figure 11 est une vue en coupe longitudinale de la tête de délivrance de la figure.10 équipée de son raccord de sortie et montée sur un réservoir conforme à la figure 2,
- la figure 12 est une vue en coupe longitudinale de la tête de délivrance du gaz montée sur le réservoir,
- la figure 13 présente une section de l'enveloppe de protection du réservoir,
- la figure 14 représente une vue de dessus et schématique et partielle du mécanisme interne de la tête de délivrance des figures 7 et 8.

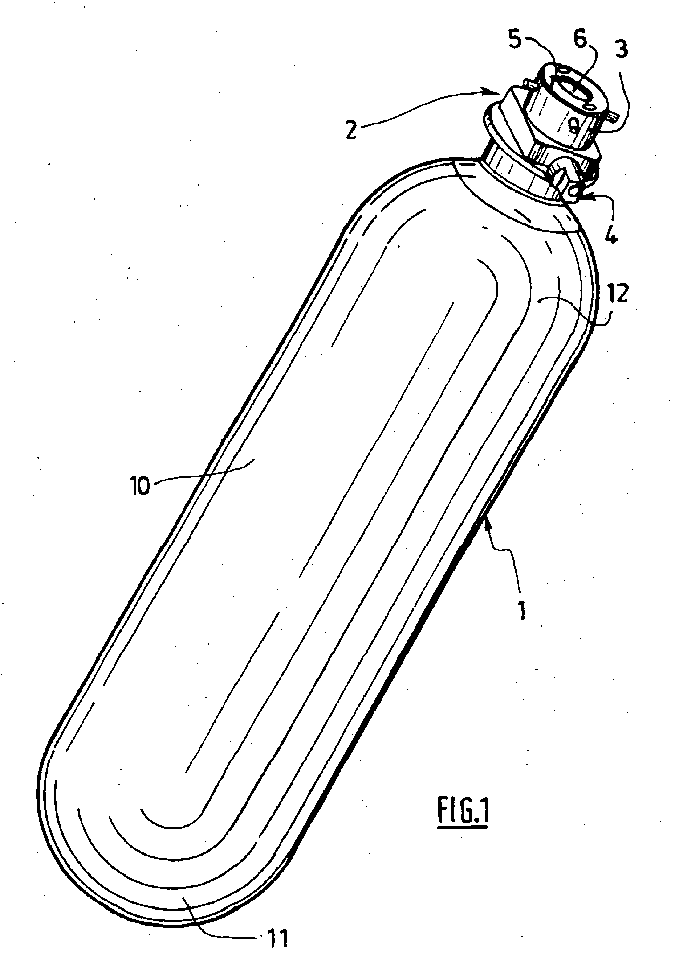

La figure 1 représente un corps de réservoir 1 1 oblong présentant une partie principale cylindrique 10 et deux extrémités inférieure 11 et supérieure 12 en forme sensiblement de dôme. L'extrémité arrondie supérieure 12 dispose d'une tête 2 de remplissage et de distribution. Comme représenté, la tête 2 de remplissage et de distribution comprend notamment une interface de connexion 3, un témoin d'état de la contenance 4, un bouclier anti-chocs 5 et un orifice central 6 donnant accès à l'intérieur du réservoir 1.

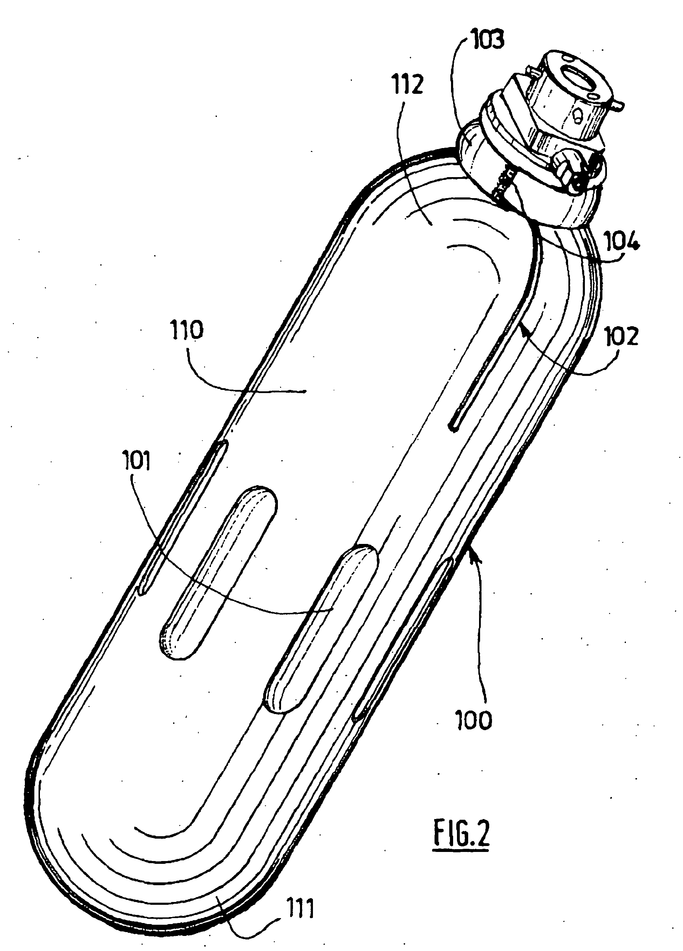

La figure 2 présente en variante l'ensemble de stockage de gaz (réservoir 1) suivant le même mode de réalisation avec une enveloppe optionnelle 100 couvrant sensiblement entièrement la surface extérieure du réservoir 1. L'enveloppe 100 (ou fourreau) est prévue pour protéger le réservoir 1 contre les chocs et les chutes éventuels.

L'enveloppe oblongue 100 de dimensions adaptées au réservoir 1 et fait correspondre son extrémité arrondie inférieure 111 avec l'extrémité inférieure 11 du réservoir 1. La partie centrale cylindrique de l'enveloppe 100 épouse la partie cylindrique 10 du réservoir 1. L'extrémité supérieure arrondie 112 de l'enveloppe recouvre quant à elle l'extrémité supérieure 12 du réservoir 1.

Des fentes 102 situées sur la périphérie de l'extrémité supérieure 112 de l'enveloppe permettent d'enfiler l'enveloppe 100 sur le réservoir 1.

A l'extrémité supérieure de l'enveloppe notamment, un collier 103 équipé d'un fermoir 104 (de type ruban d'accrochage ou bouton pression ou tout autre moyen équivalent) peut être prévu pour immobiliser l'enveloppe 100 sur le réservoir 1.

L'enveloppe 100 comporte sur sa périphérie des empreintes ergonomiques 101 permettant une bonne préhension de l'ensemble. L'enveloppe 100 est de préférence réalisée en mousse haute densité thermo-formée mais tout autre matériau peut être envisagé tel que du Néoprène, une matière élastomère, etc...

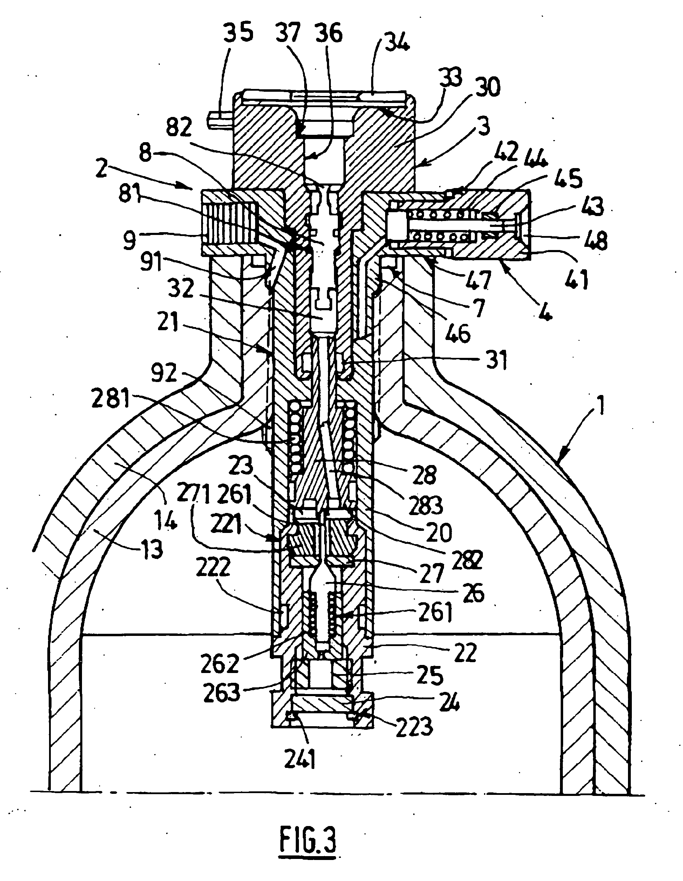

En se référant à présent à la figure 3, le réservoir 1 comporte une enveloppe 13 interne étanche (ou « liner »), par exemple en alliage d'aluminium ou analogue destinée à contenir le fluide et en particulier du gaz sous pression. L'enveloppe 13 est renforcée sur sa surface extérieure par un enroulement de fils 14 dé fibres de carbone liées par de la résine époxy ou tout autre moyen équivalent.

Une tête 2 de remplissage oblongue est disposée dans le réservoir 1, au niveau de l'orifice du réservoir 1, à l'intérieur de l'enveloppe 13.

Le corps 20 de la tête de remplissage et de distribution 2 est lié mécaniquement à l'enveloppe 13 grâce à un filetage 21 coopérant avec un taraudage formé sur l'enveloppe 13. Un joint 7 annulaire est disposé dans une gorge ménagée dans le l'enveloppe 13. La gorge est située à l'extrémité supérieure de l'enveloppe 13 et est refermée par le corps 20 de la tête 2 de remplissage et de distribution, de façon à assurer l'étanchéité entre le corps 20 et l'intérieur du réservoir 1.

La tête 2 de remplissage et de distribution comprend dans sa partie inférieure une cartouche de pré-détente 22 est vissée dans son corps 20 grâce à un système de filetage/taraudage 221.

En aval de la cartouche de pré-détente 22 (vers le haut de la cartouche 22), la tête 2 de remplissage et de distribution comprend une chambre basse pression 23. L'étanchéité entre l'intérieur du réservoir 1 et la chambre basse pression 23 est assurée par l'association 222 d'un joint torique et de bagues anti-extrusion disposés entre la cartouche 22 et le corps 20 de la tête 2.

La cartouche de pré-détente 22 comporte, d'amont en aval (c'est-à-dire de sa partie inférieure vers sa partie supérieure sur la figure 3) un filtre 24, une bague filetée 25 et un clapet 26 de pré-détente. Le filtre 24 est maintenu dans la cartouche 22 par une bague élastique 241 logée dans une gorge 223 formée dans le corps de la cartouche 22.

Le clapet 26 de pré-détente est soumis à l'action d'un ressort 261 vers un siège 27 maintenu dans la cartouche 22 sous l'action du porte-siège fileté 271. Le clapet 26 est soumis à l'effort du ressort de clapet 261 et à l'effort du gaz sous pression.

L'extrémité supérieure du clapet 26 est munie d'une tige 1261 s'étendant vers le haut dont l'extrémité est en contact avec un piston de pré-détente 28. Le piston 28 est soumis quant à lui à une contrainte de la part d'un ressort 281 en direction du clapet 26. Du fait de l'effort du ressort 281 et de l'action du gaz sur la section 282 du piston 28, le clapet 26 assure un rôle de régulation de pression.

Lors des phases de soutirage de gaz à partir du réservoir 1, le gaz contenu dans le réservoir 1 sous haute pression transite en se détendant par la cartouche de pré-détente 22 vers la chambre basse pression 23.

Le gaz détendu traverse ensuite le piston 28 par un perçage 283 formé dans le corps du piston, pour déboucher dans une chambre 32 située dans le corps 30 d'une l'interface de connexion 3. L'interface 3 de connexion est montée au niveau de l'extrémité supérieure de la tête 2.

La chambre 32 comprend une valve d'isolement 8 ayant une étanchéité avec l'intérieur du réservoir assurée par un joint 81 avec le corps 30 de l'interface de connexion 3.

La valve 8 d'isolement est par défaut fermée. La valve 8 d'isolement est par exemple une valve de type classique, telle qu'une valve comportant un corps tubulaire fixe et une broche mobile à l'intérieur du corps apte à rendre la valve passante ou non suivant la position de la broche.

La valve 8 est susceptible d'être actionnée via un pousse-valve décrit plus en détail ci-après et appartenant à un système receveur de l'ensemble de stockage ou à une tête de distribution du gaz ou à une prise de conditionnement.

L'extrémité supérieure de l'interface de connexion 3 fait saillie à l'extérieur de la tête 2 de remplissage et de distribution du réservoir 1.

Cette partie extérieure de l'interface de connexion 3 comporte quatre goupilles protubérantes 35 (baïonnettes), positionnées à 90° l'une de l'autre pour permettre l'accrochage d'un système receveur d'un ensemble de stockage ou d'une tête de distribution du gaz ou d'une prise de conditionnement. Bien entendu, cet exemple de réalisation n'est pas limitatif du fait notamment du nombre important de combinaisons de nombres, de formes et de positions de goupilles envisageables et de possibilités de détrompage (c'est à dire d'identité géométrique) correspondantes. De plus, d'autres moyens d'accrochages assurant la même fonction sont envisageables tels que une liaison vis / écrou, une genouillère, un verrou escamotable, etc...

La partie extérieure de l'interface de connexion 3 comporte un logement tubulaire formant une zone de réception 36 chargée de recevoir et de guider une extrémité tubulaire conjuguée d'un système receveur ou d'une tête de distribution du gaz ou d'une prise de conditionnement comme décrit ci-après.

A cet effet, l'extrémité tubulaire conjuguée de l'organe de commande destiné à être connecté au réservoir 1 comprend un joint torique et éventuellement d'une bague anti-extrusion pour assurer la continuité de l'étanchéité entre le dispositif de commande et le réservoir 1.

La partie extérieure de l'interface de connexion 3 comporte de préférence une membrane 33 de protection amovible destinée à éviter l'entrée de particules ou salissures dans la zone de réception 36 pouvant entraîner des dysfonctionnements du système. La membrane 33 est par exemple en polymère à mémoire de forme prédécoupée. La membrane est par exemple maintenue au niveau de l'entrée de la zone de réception 36 par un bouclier anti-chocs 34 en plastique. Bien entendu, toute autre forme de réalisation est envisageable pour protéger l'entrée de la zone de réception, par exemple un opercule à poinçonner, ou un autocollant à ôter ou analogue.

Ainsi, lors de l'introduction de l'extrémité tubulaire d'un dispositif de commande (système receveur ou tête de distribution de gaz ou prise de conditionnement) dans la zone de réception 36, la membrane prédécoupée 33 va s'effacer contre la surface 37 de l'interface de connexion 3. Par exemple, la membrane 33 de protection à mémoire de forme est prédécoupée selon quatre lobes en forme de « pétales ». Lors de son entrée, l'extrémité tubulaire mâle d'un dispositif de commande va repousser les quatre lobes contre la surface 37 de l'interface de connexion 3. Les lobes retrouvent automatiquement leur place originelle (figure 3) lors de l'extraction de cette même extrémité tubulaire.

Le réservoir 1 comporte un témoin d'état 4 comprenant un corps 41 vissé dans le corps 20 du dispositif de la tête 2 de remplissage et de distribution au moyen d'un système à filetage 47. L'étanchéité entre le témoin d'état et la tête 2 de remplissage est assurée au moyen d'un joint métallique contraint 42. Un axe 43 mobile est guidé dans le corps 41 du témoin d'état 4. L'étanchéité entre l'axe 43 et le corps 41 étant réalisée par l'association 45 d'un joint torique et d'une bague anti-extrusion.

L'axe 43 du témoin d'état 4 est soumis aux efforts antagonistes d'un ressort de rappel 44 et de la pression du gaz contenu dans le réservoir 1 acheminé dans le témoin 4 via un filetage 21 et des perçages 46.

Lorsque l'action de la pression du gaz est supérieure à l'effort du ressort de rappel 44, l'extrémité de l'axe 43 apparaît dans une chambre de visualisation 48 formée dans le corps 41 du témoin d'état 4. De cette façon, le témoin d'état indique que le stockage de gaz est plein (pression du gaz contenu dans le réservoir 1 optimale). Dans le cas contraire, l'extrémité de l'axe 43 n'apparaît pas dans une chambre de visualisation 48, ce qui indique que le stockage de gaz n'est pas plein (la pression du gaz contenu dans le réservoir 1 est inférieure à la pression optimale).

Un dispositif de sécurité (de type fusible thermique et/ou soupape de décharge, disque de rupture, etc....) peut équiper le réservoir 1 via un port 9 ménagé dans le corps 20 de la tête 2 de remplissage et de distribution. Ce dispositif de sécurité peut être alimenté par le gaz contenu dans le réservoir 1 via une saignée 92 usinée dans le filetage 21 et via des perçages 91.

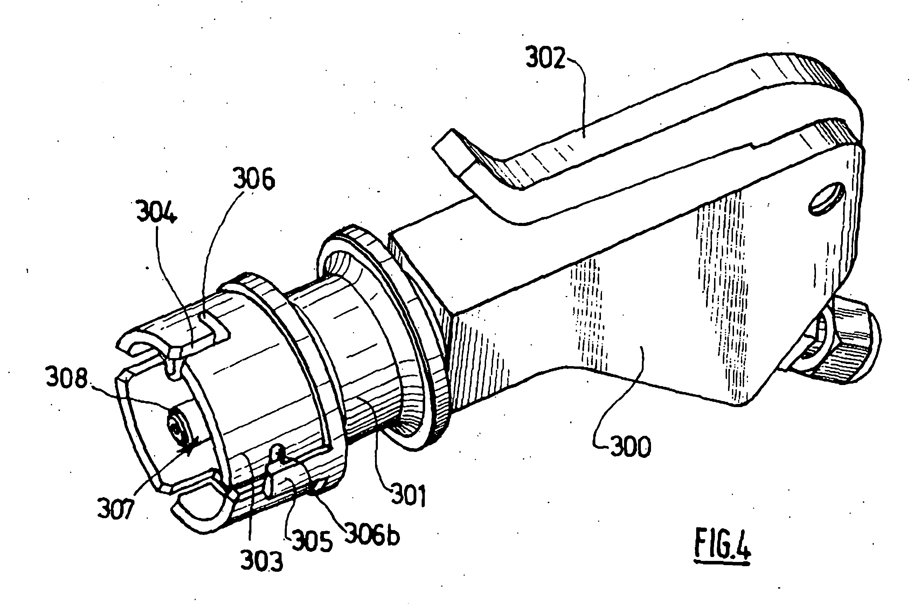

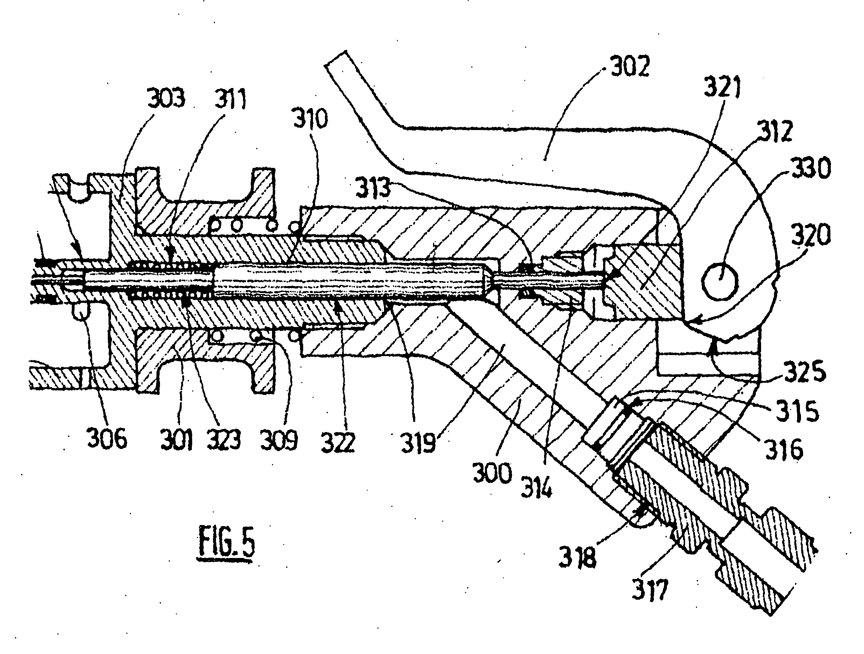

Les figures 4 et 5 illustrent une prise de remplissage présentait un corps 300, une interface de connexion 303 et un levier de commande 302. Le corps 300 est lié à l'extrémité d'un flexible de remplissage 317 grâce à un filetage 318 (par exemple conique avec étanchéité par ruban de Poly Tétra Fluoro Ethylène ou PTFE).

Le flexible de remplissage 317 alimente le circuit de remplissage via un conduit 319 de remplissage. Le conduit de remplissage 319 est exempt de salissure grâce à un filtre 315 maintenu en place dans le corps 300 sous l'effet d'une bague élastique 316 prisonnière d'une gorge ménagée dans ce même corps.

Un levier de commande 302 manuel rotatif autour d'un axe 330 est apte à transmettre un mouvement de translation à un pousse-valve 310 via une came 320 qui frotte sur un plateau d'usure 312. Bien entendu, le levier 302 manuel pivotant peut être remplacé par tout autre système analogue, par exemple par une commande automatique.

Un ressort 311 est prévu dans le corps 300 de façon à maintenir en permanence l'extrémité 321 du pousse-valve 310 sur le plateau d'usure 312 en contact avec la came 320.

Pour assurer la continuité de la section de passage du gaz dans le conduit de remplissage 319, la surface 322 extérieure du pousse-valve 310 est de section hexagonale tandis que la surface cylindrique 323 comporte 2 méplats. L'étanchéité dynamique du pousse-valve 310 avec le corps 300 est assurée au moyen d'une association 313 d'un joint torique et d'une bague anti-extrusion maintenus dans leur logement grâce à un presse étoupe 314.

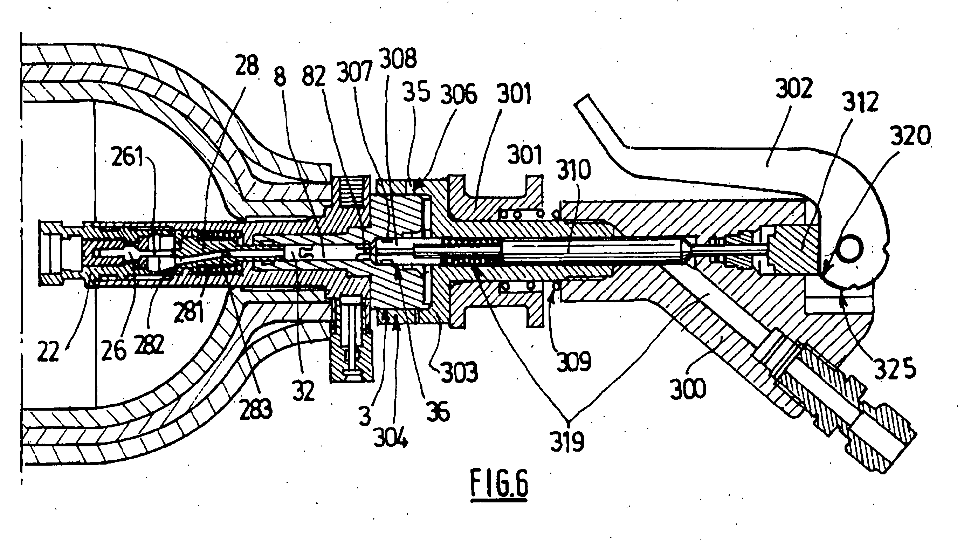

Comme présenté plus précisément dans la figure 6, l'interface de connexion 303 de la prise de conditionnement coopère avec l'interface de connexion 3 du réservoir 1.

Plus précisément, les goupilles protubérantes 35 (baïonnettes) de l'interface de connexion 3 du réservoir 1 entrent dans des canaux ou fraisures 304 de l'interface de connexion 303 de la prise de remplissage. Les goupilles 35 viennent se positionner dans les logements respectifs 306 au fond des canaux 304 coudés.

Lors de leur entrée dans les canaux 304, les goupilles poussent et escamotent temporairement un verrou de sécurité 305. Lorsque les goupilles sont dans leur logement 306, le verrou 305 est ramené dans sa position initiale de blocage par l'action d'un ressort 309. De cette façon, le verrou 305 emprisonne deux goupilles 35 diamétralement opposées dans leurs logements respectifs 306b. Dans cette position, la prise conditionnement est verrouillée sur le réservoir 1.

La prise de remplissage possède une extrémité tubulaire 308 qui vient se loger dans la zone de réception 36 de l'interface de connexion 3 du réservoir 1. L'étanchéité entre ces deux surfaces (extrémité tubulaire 308 et zone de réception 36) est assurée par l'association 307 d'un joint et d'une bague anti-extrusion.

Pour ouvrir la valve 8 du réservoir 1, le levier 302 est actionné de manière à ce que la came 320 agisse, via le plateau d'usure 312, sur le pousse-valve 310 en lui transmettant un mouvement de translation reporté sur la tige 82 de la valve 8.

Le pousse valve 310 fait alors saillie par rapport à l'extrémité tubulaire 308 et par rapport à la prise de remplissage de façon à permettre sa plongée à l'intérieur de la tête 2 logée dans le réservoir 1 pour actionner la valve 8.

La came 320 comporte une surface plane 325 permettant de maintenir stable cette position. La fermeture de la valve 8 doit être effectuée manuellement en agissant de façon inverse sur le levier de commande 302.

Le fluide de remplissage peut alors être injecté dans la prise de remplissage via le conduit 319.

Le fluide de remplissage traverse successivement la valve ouverte 8, la chambre 32 et le perçage 283 du piston de pré-détente 28. La surface 282 du piston 28 est alors soumise à la pression du gaz qui est supérieure à l'effort du ressort 281. Cette pression de gaz déplace le piston qui est ainsi désolidarisé de l'extrémité de la tige 1261 du clapet de pré-détente 26.

Le clapet de pré-détente 26 est alors ouvert par l'action de la pression du gaz qui traverse la cartouche de pré-détente 22 en sens inverse pour se retrouver dans le réservoir 1.

En fin d'opération de remplissage, après une purge de la haute pression dans le flexible de remplissage, la pré-détente peut être réactivée. La valve 8 est refermée en agissant sur le levier de commande 302 de la prise de remplissage.

Après la purge complète du gaz contenu dans tout le circuit de remplissage (tout le volume en aval de la valve 8), la prise de remplissage peut être désaccouplée par le processus inverse à celui décrit ci-dessus.

Pour le désaccouplement de la prise de remplissage, la commande 301 du verrou 305 doit être manuellement tirée en luttant contre l'effort du ressort 309 pour libérer les goupilles protubérantes 35 (baïonnettes) de leurs logements 306 et 306b en suivant la trajectoire des fraisures 304 coudées. L'extrémité tubulaire 308 s'échappe de la zone de réception 36, la membrane prédécoupée 33 reprend sa place en empêchant les particules ou salissures d'y pénétrer.

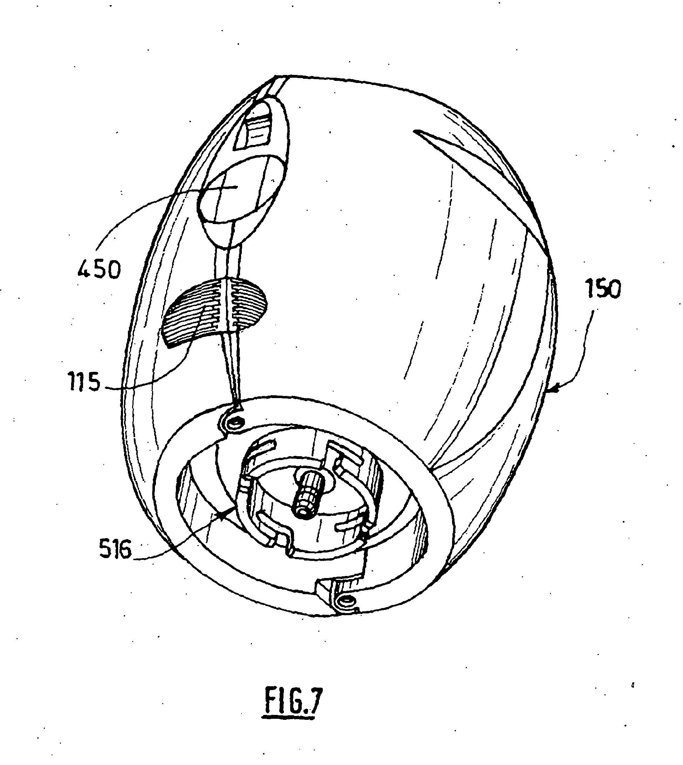

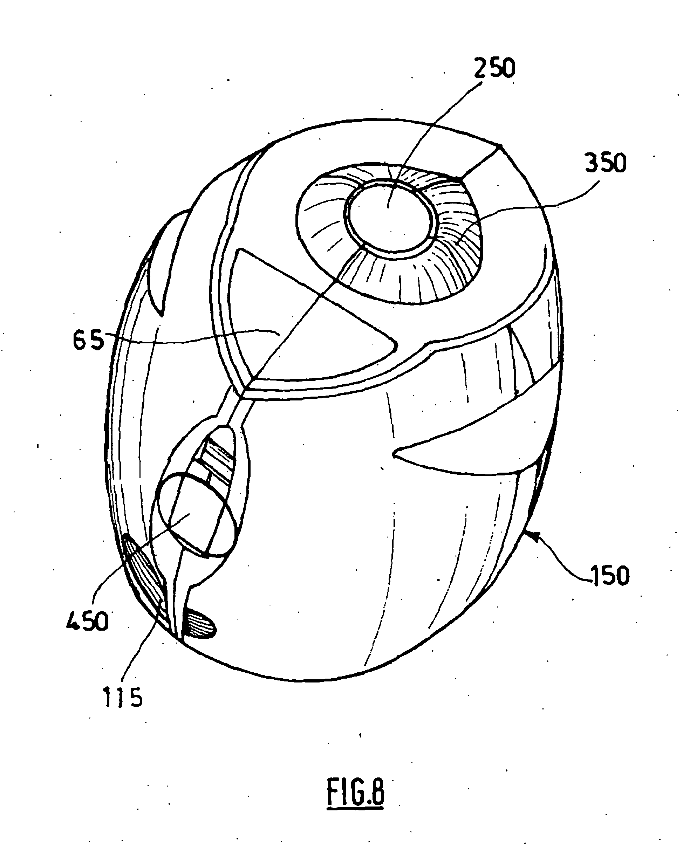

Les figures 7 et 8 illustrent une tête amovible de délivrance du gaz 150 comportant une commande d'ouverture du débit de gaz 250, un bouton annulaire de fermeture du débit de gaz 350, un accès 450 au raccordement de sortie naturellement obturé par un volet évitant les pollutions et une interface de connexion 516. La tête 150 de délivrance du gaz comporte également des persiennes d'évacuation 115 de soupapes de décharge moyenne et basse pressions et un emplacement 65 pour des informations destinées à l'utilisateur pouvant se présenter sous forme d'afficheur numérique offrant des indications d'autonomie personnalisées (ou manomètre, ou tout autre moyen connu).

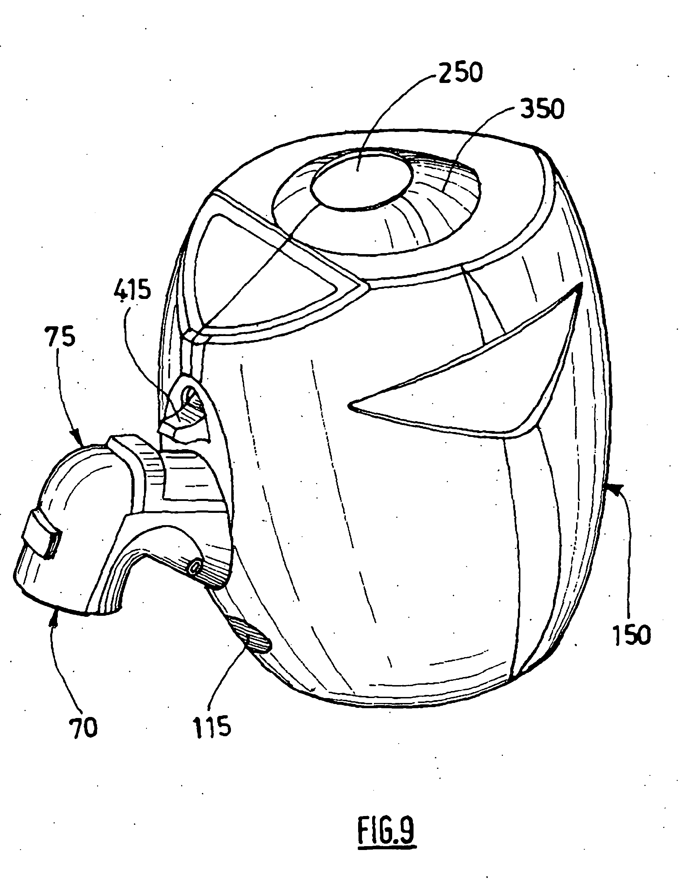

La figure 9 illustre la tête 150 de délivrance du gaz suivant le même mode de réalisation, équipée d'un raccord de sortie 75 dont l'orifice 70 est lié à un flexible d'alimentation de l'application (non représenté).

Avantageusement, la tête 150 est conformée de façon que
- si le raccord de sortie 75 n'est pas connecté, le verrouillage de la commande d'ouverture du débit de gaz 250 est impossible,
- si le raccord de sortie 75 est connecté sur la tête 150 amovible de délivrance du gaz, le verrouillage de la commande d'ouverture du débit de gaz 250 est autorisé, l'arrêt de débit de gaz est commandé par une action sur le bouton annulaire 350 et une commande 415 de déverrouillage du raccord de sortie 75 est accessible,
- si le raccord de sortie 75 est déconnecté subitement alors que la commande d'ouverture du gaz est active, cette dernière disjoncte instantanément.

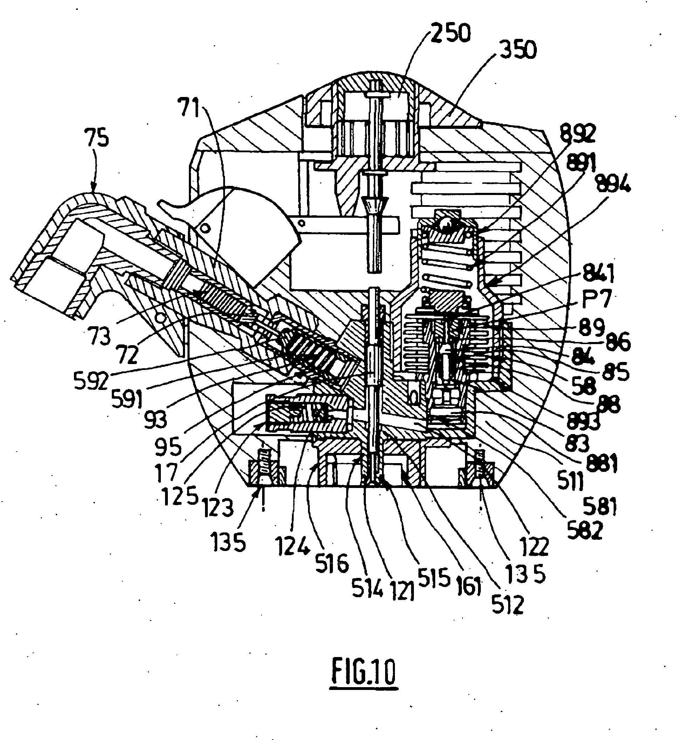

La figure 10 représente le détail de la tête de délivrance du gaz suivant le même mode de réalisation. Le carter de protection de la tête de délivrance 150 est constitué de deux demi-coquilles 511 liées entre elles par des clips et deux vis 135. La tête de délivrance 150 contient d'une part un corps 512 comprenant les différents organes actifs de délivrance du gaz et d'autre part les commandes d'interface avec l'utilisateur. En particulier, La tête de délivrance 150 comprend une commande d'ouverture du débit de gaz 250, un bouton annulaire de fermeture du débit de gaz 350, un accès 450 au raccordement de sortie 75.

La partie basse du corps 512 est terminée par une extrémité tubulaire 514 ayant un joint torique 515 et une pièce de révolution 516 ayant ici quatre fraisures 161 positionnées à 90°. Bien entendu, l'invention ne se limite pas à cette configuration et toute autre combinaison de nombres et positions de fraisures peut être envisagée.

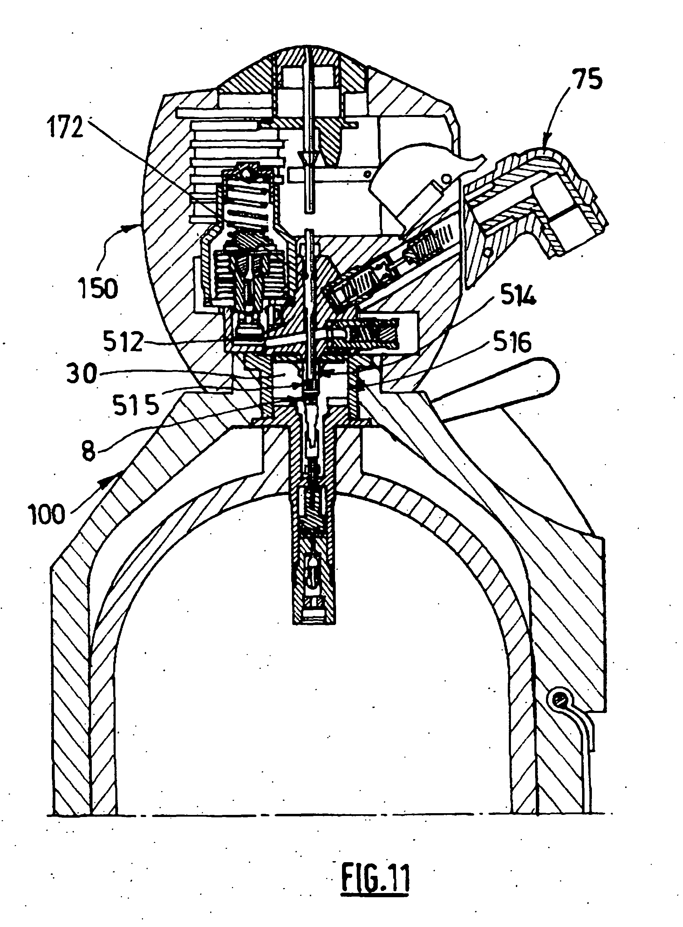

La partie basse du corps 512 forme une interface de connexion pouvant coopérer et se lier avec l'interface de raccordement d'un réservoir 1 tel que décrit ci-dessus et illustré à la figure 11. Selon la figure 11, la tête de délivrance du gaz 150 accoste et prolonge le fourreau protecteur 100 du réservoir 1.

Le corps 512 est traversé par un pousse-valve 17 ayant une étanchéité dynamique avec ledit corps 512 grâce à un joint torique 172.

L'extrémité supérieure du pousse-valve 17 vient en contact avec l'axe de la commande d'ouverture du débit de gaz 250 lorsque cette dernière est appuyée et verrouillée.

L'axe de la commande d'ouverture du débit de gaz 250 peut ainsi transmettre un mouvement de translation au pousse-valve 17 qui lui-même reporte ce mouvement de translation sur la tige de valve 8 du réservoir 1 décrit ci-dessus. Le pousse-valve 17 fait alors saillie au-delà de la partie basse du corps 512 pour pénétrer au sein de la tête 2 du réservoir 1, de façon à réaliser l'ouverture du débit de gaz.

Le fluide stocké dans le réservoir 1 entre alors dans le corps 512 par l'orifice annulaire 121. L'orifice annulaire 121 alimente simultanément, via le perçage transverse 122, une soupape de sécurité moyenne pression 123 et un étage de détente 58.

La soupape de sécurité moyenne pression 123 comprend un clapet de décharge 124 dont l'ouverture est déterminée par l'effort de tarage d'un ressort 125. La soupape de sécurité moyenne pression 123 est conformée pour laisser évacuer le surplus de pression par les persiennes 115 ménagées dans les deux demi-coquilles 511.

L'étage de détente 58 comprend un mécanisme enfermé dans une cartouche 88 qui est vissée dans le corps 512 et étanche avec celui-ci grâce à un joint torique 881.

L'entrée du gaz dans l'étage de détente 58 se fait par la traversée d'un filtre 881 maintenu par une bague élastique 582 prisonnière d'une gorge ménagée dans le corps 512. L'entrée du gaz dans l'étage de détente 58 est réalisée également par le passage autour d'une entretoise 83 permettant une arrivée radiale et homogène du fluide sur un clapet de détente 84.

Du fait de l'effort d'un ressort de clapet 85 et l'action du gaz, le clapet de détente 84 coopère avec un siège 86. Le siège 86 est maintenu dans la cartouche 88 sous l'action d'un porte siège fileté.

Le clapet 84 est muni d'une tige 841 s'étendant vers le haut dont l'extrémité est en contact avec un soufflet métallique 89. Le soufflet métallique 89 est maintenu de façon étanche dans le corps 12 sous l'action combinée d'un capot vissé 894 et d'un joint torique. 893. Le clapet 84 est soumis à l'effort d'un ressort de détente 891 précontraint par une vis de détente 892 et à l'effort du gaz sur la section du soufflet métallique 89. De cette façon, le clapet 84 assure une régulation de pression.

Avantageusement, la vis de détente 892 est réglable pour permettre à l'utilisateur de faire varier l'effort du ressort et donc la régulation de pression.

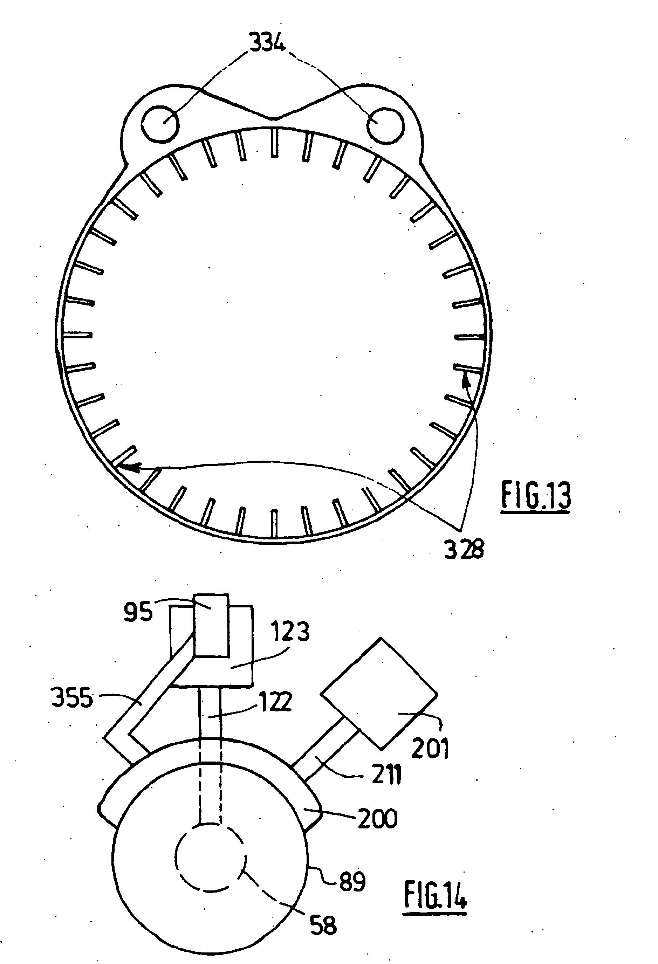

Comme représenté schématiquement à la figure 14, un perçage 200, 355 ménagé dans le corps 12 assure le transit du gaz détendu depuis l'intérieur du soufflet métallique 89 vers une connexion de sortie 95 (figure 10).

En parallèle, le perçage 200, 211 ménagé dans le corps 12 assure le transit du gaz détendu rentre le soufflet métallique 89 et une soupape de décharge basse pression 201 (du même type que la soupape 123 décrite ci-dessus).

Les consignes d'ouverture des soupapes de décharge 123 et 201 sont choisie en adéquation avec les besoins de l'application. La soupape 123 moyenne pression est par exemple dimensionnée pour évacuer vers l'extérieur des pressions supérieures à 20 bar tandis que la soupape de décharge basse pression 201 est dimensionnée pour évacuer vers l'extérieur des pressions supérieures à 400mbar.

La connexion de sortie 95 est vissé de façon. étanche dans le corps 12. Cette connexion de sortie mâle comprend une jupe 591 enfermant un obturateur 592 qui est par défaut fermé et étanche avec ladite jupe 591 par l'action d'un ressort 93.

L'obturateur 592 prévient d'une part l'entrée de particules et de salissures dans le circuit de gaz lorsque le raccord de sortie 75 n'est pas connecté. De plus, l'obturateur 592 empêche un débit de fluide à l'atmosphère en cas soit d'une action forcée sur la commande d'ouverture 250 alors que le raccord de sortie 75 n'est pas connecté, soit en cas de déconnexion du raccord de sortie 75.

Le raccord de sortie 75 est composé d'un corps 71 enfermant un obturateur 72. L'obturateur 72 est soumis à faction d'un ressort 73 de façon à être fermé par défaut et étanche avec ledit corps 71.

Cet obturateur 72 prévient d'une part l'entrée de particules et de salissures dans le circuit de gaz lorsque le raccord de sortie 75 n'est pas connecté et empêche d'autre part la purge à l'atmosphère du fluide contenu dans le tuyau d'alimentation de l'application en cas de déconnexion dudit raccord de sortie 75. Lorsque le raccord de sortie 75 est connecté sur la connexion de sortie mâle 95, d'une part le circuit devient étanche sous l'action d'un joint torique et d'autre part le circuit s'ouvre grâce aux actions mutuelles des deux obturateurs 72 et 592.

Le réservoir 1 comprend un dispositif de pré détente intégré dans son goulot, et, éventuellement également intégré dans ce même goulot, un organe d'isolement. Ainsi, la très haute pression (pression de stockage) est isolée et l'utilisateur est protégé. La partie saillante du réservoir ne contient pas de haute pression et ne nécessite pas d'être protégée par un chapeau.

L'interface unique de connexion d'entrée/sortie de ce réservoir est de type rapide et ne nécessite aucun outil. Avantageusement, le rechargement de ce réservoir 1 n'est possible qu'avec une prise de remplissage spécifique coopérant avec l'interface de connexion unique du réservoir. L'accès à cette interface est réalisé dans l'axe principal du réservoir 1, permettant d'envisager des solutions de conditionnement automatisé.

Un concept de distribution automatique de ces cartouches, bouteilles ou réservoirs peut être imaginé pour des applications aussi bien professionnelles que grand public. La délivrance du gaz nécessite soit d'insérer la bouteille, cartouche ou réservoir dans un logement receveur équipé de moyens d'ouverture de la valve et de régulation du gaz en cohérence avec l'application, soit de connecter une tête spécifique dotée de ces mêmes moyens.

La connexion réalisée dans l'axe du réservoir simplifie les manipulations et améliore implicitement la sécurité. L'interfaçage entre bouteille, cartouche ou réservoir et système receveur ou tête spécifique est réalisé de sorte que la connexion ne soit possible que si le gaz délivré est assurément celui attendu par l'application.

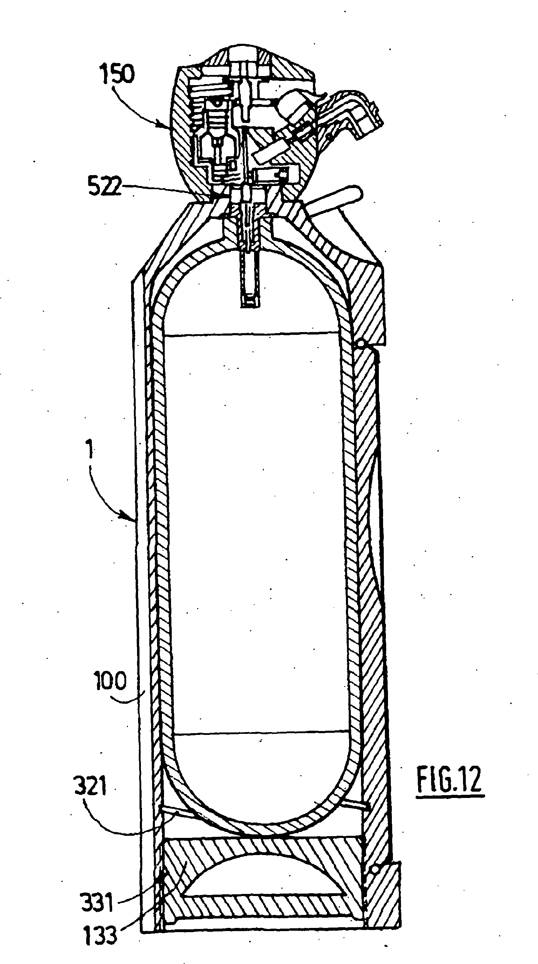

La figure 12 représente la tête de délivrance du gaz 150 montée sur sa source de gaz (réservoir 1) tel que décrit ci-dessus. Le réservoir 1 est guidé et enfermé dans un autre type de fourreau de protection 100 à fond rapporté 133. Le fourreau de protection 100 est creux et comporte sur sa surface intérieure au moins une zone comportant des lamelles souples longitudinales 328 (cf. figure 13).

Les lamelles 328 solidaires de la paroi interne du fourreau 100 permettent à la fois d'immobiliser le réservoir dans ledit fourreau 100 et de compenser ses variations géométriques résultant notamment de sa pression interne et de ses tolérances de fabrication. Par ailleurs, les lamelles 328 permettent d'absorber l'énergie générée par un choc ou une chute du réservoir ainsi habillé.

Le fond rapporté 133 de l'enveloppe 100 comprend un filet hélicoïdal 331 destiné à être vissé dans une saignée hélicoïdale 321 du corps du fourreau 100. Le fond 133 amovible permet ainsi de faciliter le montage et le serrage du réservoir 1 dans ledit fourreau protecteur 100. De plus le fond 133 amovible permet de ne pas entraver les opérations de maintenance usuelles du réservoir 1.

La partie supérieure du fourreau 100 peut comporter une empreinte femelle 522 pour permettre de positionner et d'indexer en rotation le réservoir 1 par rapport audit fourreau 100. De cette façon, il est par exemple possible de faire correspondre le témoin d'état de contenance est les organes de sécurité (soupape de décharge, fusible thermique, disque de rupture, etc. ...) dudit réservoir 1 avec des ouvertures correspondantes de son fourreau protecteur 100.

L'invention peut s'appliquer à toutes les utilisations de fluide demandant une grande facilité d'emploi, un bon compromis légèreté, encombrement et capacité (autonomie). Par exemple : l'hydrogène gazeux pour pile à combustible portable ou mobile, les gaz médicaux, les gaz pour analyses et laboratoires.

## Revendications

1. Ensemble comprenant un réservoir (1) de stockage de gaz sous pression et un dispositif de commande du remplissage et/ou du soutirage dudit réservoir (1), le réservoir (1) comprenant un orifice permettant la communication avec l'intérieur du réservoir, une tête (2) de remplissage et de distribution disposée au niveau de l'orifice et comprenant un dispositif (22) de pré-détente intégré au moins partiellement à l'intérieur du volume du réservoir (1), une interface (3) de connexion destinée à coopérer en accrochage et de façon amovible avec le dispositif de commande de remplissage et/ou du soutirage de gaz, dans lequel la tête (2) comprend un organe d'isolement (8) tel qu'une valve, logé au moins partiellement à l'intérieur du volume de la tête (2) et accessible pour un organe d'ouverture (310, 17) extérieur à la tête (2) via un orifice (6) d'accès formé dans la tête (2), le dispositif de commande du remplissage et/ou du soutirage comportant un corps pourvu d'une extrémité (303, 516) de connexion destinée à coopérer en accrochage amovible avec l'interface (3) de connexion, un organe (310, 17) d'ouverture mobile relativement au corps, un élément (302, 250) d'actionnement apte à déplacer sélectivement l'organe (310, 17) d'ouverture entre une position de repos escamotée et une position de travail,
de façon à permettre la plongée de l'organe d'ouverture (310, 17) à l'intérieur de l'orifice d'accès de la tête pour actionner selectivement en ouverture l'organe d'isolement (8),
**caractérisé en ce que** dans la position de travail une extrémité de l'organe (310, 17) d'ouverture fait saillie en dehors du corps, au-delà de l'extrémité (303, 516) de connexion et **en ce que** le dispositif de commande du remplissage et/ou du soutirage comporte un orifice d'entrée pour le gaz soutiré du réservoir (1), une première soupape (123) de sécurité et un organe (58) de détente du fluide soutiré, la première soupape (123) de sécurité et l'organe (58) de détente étant reliés en parallèle à l'orifice d'entrée.

2. Ensemble selon la revendication 1, **caractérisé en ce que** l'organe d'isolement (8) est Intégré au moins partiellement à l'intérieur du volume du réservoir (1).

3. Ensemble selon l'une quelconque des revendications précédentes, **caractérisé en ce que** le dispositif de commande comporte un orifice pour le transit de gaz depuis et/ou vers le réservoir (1) et **en ce que** l'organe (310, 17) d'ouverture est mobile dans ledit orifice de façon que l'organe d'isolement (8) et le gaz empruntent le même passage ou canal.

4. Ensemble selon l'une quelconque des revendications 1 à 3, **caractérisé en ce que** la sortie aval (200) de l'organe (58) de détente est reliée à une deuxième soupape (201) de sécurité et à un orifice de sortie (95) de fluide vers l'extérieur du dispositif.

5. Ensemble selon la revendication 4, **caractérisé en ce que** Il deuxième soupape (201) de sécurité et l'orifice de sortie (95) de fluide sont reliés en Parallèles à la sortie (200) de l'organe (8) de détente via des conduits respectifs (211, 355).

6. Ensemble selon l'une quelconque des revendications précédentes, **caractérisé en ce que** l'interface de connexion (3) comprend une zone de réception (36) concave destinée à accueillir et guider l'extrémité en saillie de l'organe d'ouverture (310, 17) de vanne.

7. Ensemble selon la revendication 6, **caractérisé en ce que** l'extrémité (303, 516) de connexion du dispositif de commande possède une extrémité tubulaire (308, 514) dans laquelle l'organe d'ouverture (310, 17) est monté mobile et **en ce que** la zone de réception (36) et l'extrémité tubulaires (308, 514) ont des formes et dimensions conjuguées pour permettre à l'extrémité tubulaire (308, 514) de venir se loger dans la zone de réception (36).

8. Ensemble selon la revendication 6 ou 7, **caractérisé en ce que** la tête (2) comprend un circuit de remplissage s'étendant entre une première extrémités pourvue d'un orifice (6) de remplissage et une seconde extrémité destinée à communiquer avec l'intérieur du réservoir, un circuit de soutirage s'étendant entre une première extrémité destinée à communiquer avec l'intérieur du réservoir et une seconde extrémité pourvue d'un orifice (6) de soutirage, et **en ce que** l'orifice de remplissage et/ou l'orifice de soutirage débouche dans ia zone de réception (36) concave de l'interface (3) de connexion.

9. Ensemble selon la revendication 8, **caractérisé en ce que** l'orifice (6) de remplissage et l'orifice de soutirage coïncident dans la zone de réception (36) concave de l'interface (3) de connexion.

10. Ensemble selon la revendication 9. **caractérisée en ce que** l'orifice d'accès comprend ou est constitué par la zone de réception (36) concave.

11. Ensemble selon l'une quelconque des revendications précédentes, **caractérisé en ce que** l'interface de connexion (3) de la tête (2) et l'extrémité (303, 516) de connexion du dispositif de commande comportent des éléments (306) d'accrochage complémentaires tels que des ergots (35) en saillie et/ou des logements (304, 306) conjugués de façon à constituer une fixation amovible de type « à baïonnette ».

12. Ensemble selon la revendication 11, **caractérisé en ce qu'**il comporte des organes (305) de verrouillage amovibles des éléments d'accrochage.

13. Ensemble selon la revendication 11 ou 12, **caractérisé en ce que** les éléments d'accrochage comportent des logements (304, 306) sensiblement en forme de rainure coudée comprenant une première extrémité ouverte destinée à permettre l'entrée et la sortie d'un ergot (35) relativement au logement (304, 306) et une seconde extrémité formant un fond destiné à accueillir l'ergot (35) en position d'accrochage, les organes (305) de verrouillage amovibles comportant au moins une extrémité formant butée (305) dans au moins un logement (304, 306), la butée (305) étant mobile entre une première position de blocage entre les deux extrémités du logement (304, 306), et une seconde position escamotée libérant le passage entre les deux extrémités du logement (304, 306).

14. Ensemble selon la revendication 13, **caractérisé en ce qu'**il comporte un ou des éléments (309) de rappel sollicitant la butée (305) vers sa position de blocage, la butée (305) étant apte à être déplacée vers sa position escamotée soit sous la poussée d'un ergot (35) introduit à partir de la première extrémité du logement (304, 306), soit par traction des organes (305) de verrouillage à partir d'une zone (301) de préhension ou déplaçable à distance.

15. Ensemble selon l'une quelconque des revendications 1 à 14, **caractérisé en ce que** l'organe d'isolement (8) est disposé en aval du dispositif de pré-détente (22) selon un trajet depuis l'intérieur du réservoir vers l'extérieur du réservoir.

## Claims

1. An assembly comprising a tank (1) for storing pressurized gas and a device for controlling the filling of and/or the tapping-off from said tank (1), the tank (1) comprising an orifice allowing communication with the inside of the tank, a filling and distribution head (2) positioned at the orifice and comprising a pre-regulating device (22) at least partially incorporated into the volume of the tank (1), a connection interface (3) intended to collaborate for the purposes of attachment and removably with the device for controlling the filling of and/or the tapping-off of gas, in which assembly the head (2) comprises an isolating member (8) such as an isolating valve at least partially housed inside the volume of the head (2) and accessible to an opening member (310, 17) outside the head (2) via an access orifice (6) formed in the head (2), the device for controlling the filling and/or the tapping-off comprising a body provided with a connection end (303, 516) intended to collaborate for removable attachment purposes with the connection interface (3), an opening member (310, 17) able to move relative to the body, an actuating element (302, 250) able to move the opening member (310, 17) selectively between a retracted rest position and a work position so as to allow the opening member (310, 17) to dip down inside the access orifice in the head in order selectively to open the isolating member (8), **characterized in that**, in the work position, one end of the opening member (310, 17) projects out from the body beyond the connection end (303, 516) and **in that** the device for controlling the filling and/or the tapping-off comprises an inlet orifice for the gas tapped off from the tank (1), a first safety valve (123) and a member (58) for regulating the pressure of the tapped-off fluid, the first safety valve (123) and the pressure-regulating member (58) being connected in parallel to the inlet orifice.

2. Assembly according to Claim 1, **characterized in that** the isolating member (8) is at least partially incorporated into the volume of the tank (1).

3. Assembly according to either of the preceding claims, **characterized in that** the control device comprises an orifice for the passage of gas from and/or to the tank (1), and **in that** the opening member (310, 17) is able to move in said orifice in such a way that the isolating member (8) and the gas follow the same passage or duct.

4. Assembly according to any one of claims 1 to 3, **characterized in that** the downstream outlet (200) of the regulating member (58) is connected to a second safety valve (201) and to an outlet orifice (95) letting fluid out of the device.

5. Assembly according to Claim 4, **characterized in that** the second safety valve (201) and the fluid outlet orifice (95) are connected in parallel to the outlet (200) of the regulating member (58) via respective pipes (211, 355).

6. Assembly according to any one of the preceding claims, **characterized in that** the connection interface (3) comprises a concave accommodating region (36) intended to accommodate and to guide the projecting end of the valve opening member (310, 17).

7. Assembly according to Claim 6, **characterized in that** the connection end (303, 516) of the control device has a tubular end (308, 514) in which the opening member (310, 17) is mounted such that it can move, and **in that** the accommodating region (36) and the tubular end (308, 514) have mating shapes and sizes to allow the tubular end (308, 514) to be housed in the accommodating region (36).

8. Assembly according to claim 6 or 7, **characterized in that** the head (2) comprises a filling circuit extending between a first end provided with a filling orifice (6) and a second end intended to communicate with the inside of the tank, a tapping-off circuit extending between a first end intended to communicate with the inside of the tank and a second end provided with a tapping-off orifice (6), and **in that** the filling orifice and/or the tapping-off orifice opens into the concave accommodating region (36) of the connection interface (3).

9. Assembly according to Claim 8, **characterized in that** the filling orifice (6) and the tapping-off orifice coincide in the concave accommodating region (36) of the connection interface (3).

10. Assembly according to Claim 9, **characterized in that** the access orifice comprises or consists of the concave accommodating region (36).

11. Assembly according to any one of the preceding claims, **characterized in that** the connection interface (3) of the head (2) and the connection end (303, 516) of the control device comprise complementary attachment elements (306) such as projecting pegs (35) and/or mating housings (304, 306) so as to form a removable fastening of the "bayonet" type.

12. Assembly according to Claim 11, **characterized in that** it comprises removable members (305) for locking the attachment elements.

13. Assembly according to Claim 11 or 12, **characterized in that** the attachment elements comprise housings (304, 306) substantially in the shape of cranked slots having an open first end intended to allow a peg (35) to enter and exit the housing (304, 306) and a second end that forms a closed end intended to accommodate the peg (35) in the attached position, the removable locking members (305) comprising at least one end forming an end stop (305) in at least one housing (304, 306), the end stop (305) being able to move between an immobilizing first position between the two ends of the housing (304, 306), and a retracted second position allowing travel between the two ends of the housing (304, 306).

14. Assembly according to Claim 13, **characterized in that** it comprises one or more return elements (309) urging the end stop (305) into its immobilizing position, the end stop (305) being capable of being moved into its retracted position either under the pressure of a peg (35) inserted from the first end of the housing (304, 306) or by pulling on the locking members (305) using a region (301) for grasping or which can be moved remotely.

15. Assembly according to any one of Claims 1 to 14, **characterized in that** the isolating member (8) is positioned downstream of the pre-regulating device (22) in a path from the inside of the tank to the outside of the tank.

## Patentansprüche

1. Einheit, die einen Behälter (1) zur Lagerung von Druckgas und eine Vorrichtung zum Einfüllen in den und/oder zur Entnahme aus dem Behälter (1), wobei der Behälter (1) eine Öffnung enthält, die die Verbindung mit dem Inneren des Behälters ermöglicht, einen Einfüll- und Ausgabekopf (2), der im Bereich der Öffnung angeordnet ist und eine Vorrichtung (22) zur Vorentspannung enthält, die zumindest teilweise ins Innere des Volumens des Behälters (1) integriert ist, und eine Verbindungsschnittstelle (3) enthält, die dazu bestimmt ist, zur Befestigung und lösbar mit der Gas-Einfüll- und/oder Entnahmevorrichtung zusammenzuwirken, wobei der Kopf (2) ein Isolierelement (8) wie ein Ventil enthält, das zumindest teilweise im Inneren des Volumens des Kopfes (2) angeordnet und für ein Öffnungsorgan (310, 17) außerhalb des Kopfes (2) über eine im Kopf (2) geformte Zugangsöffnung (6) zugänglich ist, wobei die Einfüll- und/oder Entnahme-Steuervorrichtung einen Körper, der mit einem Verbindungsende (303, 516) versehen ist, das dazu bestimmt ist, in lösbarer Befestigung mit der Verbindungsschnittstelle (3) zusammenzuwirken, ein bezüglich des Körpers bewegliches Öffnungsorgan (310, 17) und ein Betätigungselement (302, 250) aufweist, das das Öffnungsorgan (310, 17) selektiv zwischen einer eingezogenen Ruhestellung und einer Arbeitsstellung verschieben kann, um das Eintauchen des Öffnungsorgans (310, 17) ins Innere der Zugangsöffnung des Kopfes zu ermöglichen, um das Öffnen des Isolierorgans (8) selektiv zu betätigen, **dadurch gekennzeichnet, dass** in der Arbeitsstellung ein Ende des Öffnungsorgans (310, 17) über das Verbindungsende (303, 516) hinaus aus dem Körper vorsteht, und dass die Einfüll- und/oder Entnahme-Steuervorrichtung eine Eingangsöffnung für das aus dem Behälter (1) entnommene Gas, ein erstes Sicherheitsventil (123) und ein Entspannungsorgan (58) des entnommenen Fluids aufweist, wobei das erste Sicherheitsventil (123) und das Entspannungsorgan (58) parallel mit der Eingangsöffnung verbunden sind.

2. Einheit nach Anspruch 1, **dadurch gekennzeichnet, dass** das Isolierorgan (8) mindestens teilweise ins Innere des Volumens des Behälters (1) integriert ist.

3. Einheit nach einem der vorhergehenden Ansprüche, **dadurch gekennzeichnet, dass** die Steuervorrichtung eine Öffnung für den Übergang von Gas von und/oder zu dem Behälter (1) aufweist, und dass das Öffnungsorgan (310, 17) so in der Öffnung beweglich ist, dass das Isolierorgan (8) und das Gas durch den gleichen Durchgang oder Kanal gehen.

4. Einheit nach einem der Ansprüche 1 bis 3, **dadurch gekennzeichnet, dass** der hintere Ausgang (200) des Entspannungsorgans (58) mit einem zweiten Sicherheitsventil (201) und mit einer Austrittsöffnung (95) von fluid nach außerhalb der Vorrichtung verbunden ist.

5. Einheit nach Anspruch 4, **dadurch gekennzeichnet, dass** das zweite Sicherheitsventil (201) und die Fluidaustrittsöffnung (95) parallel mit dem Ausgang (200) des Entspannungsorgans (58) über jeweilige Kanäle (211, 355) verbunden sind.

6. Einheit nach einem der vorhergehenden Ansprüche, **dadurch gekennzeichnet, dass** die Verbindungsschnittstelle (3) eine konkave Aufnahmezone (36) enthält, die dazu bestimmt ist, das vorstehende Ende des Ventilöffnungsorgans (310, 17) aufzunehmen und zu führen.

7. Einheit nach Anspruch 6, **dadurch gekennzeichnet, dass** das Verbindungsende (303, 516) der Steuervorrichtung ein rohrförmiges Ende (308, 514) besitzt, in das das Öffnungsorgan (310, 17) beweglich montiert ist, und dass die Aufnahmezone (36) und das rohrförmige Ende (308, 514) einander entsprechende Formen und Abmessungen haben, um es dem rohrförmigen Ende (308, 514) zu ermöglichen, sich in die Aufnahmezone (36) einzufügen.

8. Einheit nach Anspruch 6 oder 7, **dadurch gekennzeichnet, dass** der Kopf (2) einen Füllkreis enthält, der sich zwischen einem ersten Ende, das mit einer Füllöffnung (6) ausgestattet ist, und einem zweiten Ende erstreckt, das dazu bestimmt ist, mit dem Inneren des Behälters in Verbindung zu stehen, wobei ein Entnahmekreis sich zwischen einem ersten Ende, das dazu bestimmt ist, mit dem Inneren des Behälters in Verbindung zu stehen, und einem zweiten Ende erstreckt, das mit einer Entnahmeöffnung (6) ausgestattet ist, und dass die Füllöffnung und/oder die Entnahmeöffnung in der konkaven Aufnahmezone (36) der Verbindungsschittstelle (3) mündet.

9. Einheit nach Anspruch 8, **dadurch gekennzeichnet, dass** die Füllöffnung (6) und die Entnahmeöffnung in der konkaven Aufnahmezone (36) der Verbindungsschnittstelle (3) zusammenfallen.

10. Einheit nach Anspruch 9, **dadurch gekennzeichnet, dass** die Zugangsöffnung die konkave Aufnahmezone (36) enthält oder aus ihr besteht.

11. Einheit nach einem der vorhergehenden Ansprüche, **dadurch gekennzeichnet, dass** die Verbindungsschnittstelle (3) des Kopfes (2) und das Verbindungsende (303, 516) der Steuervorrichtung komplementäre Befestigungselemente (306) wie vorstehende Zapfen (35) und/oder Aufnahmen (304, 306) aufweisen, die einander so entsprechen, dass sie eine lösbare Befestigung vom "Bajonett"-Typ bilden.

12. Einheit nach Anspruch 11, **dadurch gekennzeichnet, dass** sie entfernbare Verriegelungsorgane (305) der Befestigungselemente aufweist.

13. Einheit nach Anspruch 11 oder 12, **dadurch gekennzeichnet, dass** die Befestigungselemente Aufnahmen (304, 306) im Wesentlichen in Form einer gekrümmten Rille aufweisen, die ein erstes offenes Ende, das dazu bestimmt ist, den Eintritt und den Austritt eines Zapfens (35) bezüglich der Aufnahme (304, 306) zu ermöglichen, und ein zweites Ende enthält, das einen Boden bildet, der dazu bestimmt ist, den Zapfen (35) in der Befestigungsstellung aufzunehmen, wobei die entfernbaren Verriegelungsorgane (305) mindestens ein einen Anschlag bildendes Ende (305) in mindestens einer Aufnahme (304, 306) aufweisen, wobei der Anschlag (305) zwischen einer ersten Blockierstellung zwischen den zwei Enden der Aufnahme (304, 306) und einer zweiten eingezogenen Stellung beweglich ist, die den Durchgang zwischen den zwei Enden der Aufnahme (304, 306) freigibt.

14. Einheit nach Anspruch 13, **dadurch gekennzeichnet, dass** sie eines oder mehrere Rückstellelemente (309) aufweist, die den Anschlag (305) in seine Blockierstellung beaufschlagen, wobei der Anschlag (305) entweder unter dem Schub eines Zapfens (35), der ausgehend vom ersten Ende der Aufnahme (304, 306) eingeführt wird, oder durch Zug der Verriegelungsorgane (305) ausgehend von einer Greifzone (301) in seine eingezogene Stellung verschoben werden kann oder aus der Ferne verschiebbar ist.

15. Einheit nach einem der Ansprüche 1 bis 14, **dadurch gekennzeichnet, dass** das Isolierorgan (8) hinter der Vorentspannungsvorrichtung (22) gemäß einer Strecke von der Innenseite des Behälters zur Außenseite des Behälters angeordnet ist.
